# FASCICULE DE BREVET EUROPEEN

(11) **EP 3 464 824 B1**
(45) Date de publication et mention de la délivrance du brevet: **09.12.2020**
(21) Numéro de dépôt: 17730882.2
(22) Date de dépôt: 31.05.2017
(51) Int. Cl.: F01D 5/18

(54) **AUBE DE TURBINE COMPRENANT UNE PORTION D'ADMISSION D'AIR DE REFROIDISSEMENT INCLUANT UN ELEMENT HELICOÏDAL POUR FAIRE TOURBILLONNER L'AIR DE REFROIDISSEMENT**
TURBINENSCHAUFEL MIT EINEM KÜHLLUFTANSAUGABSCHNITT MIT EINEM SCHRAUBENFÖRMIGEN ELEMENT ZUM VERWIRBELN DER KÜHLLUFT
TURBINE VANE INCLUDING A COOLING-AIR INTAKE PORTION INCLUDING A HELICAL ELEMENT FOR SWIRLING THE COOLING AIR

(30) Priorité: 02.06.2016 FR 1655014
(43) Date de publication de la demande: 10.04.2019
(73) Titulaire: Safran Aircraft Engines, 75015 Paris (FR)
(72) Inventeur: BOTREL, Erwan, Daniel, 77550 Moissy-Crayamel (FR); CONGRATEL, Sébastien, Serge, Francis, 77550 Moissy-Crayamel (FR); PARINET, Simon, 77550 Moissy-Crayamel (FR)
(74) Mandataire: Brevalex
(86) Numéro de dépôt international: PCT/FR2017/051359
(87) Numéro de publication internationale: WO 2017/207924

(56) Documents cités:
- EP-A1- 2 947 273
- EP-A2- 1 923 537
- WO-A2-2014/175951
- DE-U1- 8 305 539
- FR-A1- 2 995 342

## Description

### DOMAINE TECHNIQUE

L'invention concerne une aube de turbine destinée à équiper par exemple un moteur d'aéronef de type turboréacteur à double flux ou turbopropulseur, ou bien une turbine à gaz industrielle.

### ÉTAT DE LA TECHNIQUE ANTÉRIEURE

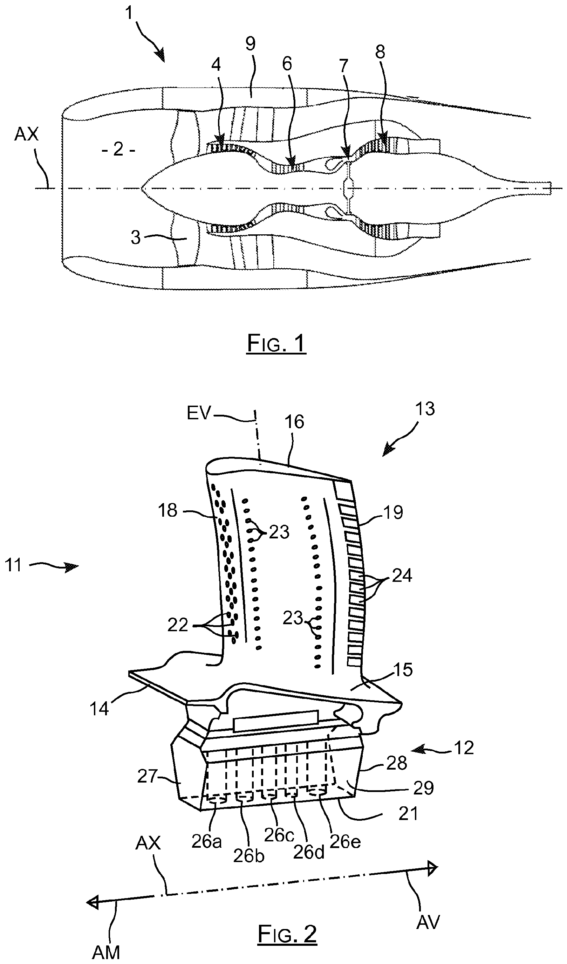

Dans un tel moteur 1 représenté en figure 1, l'air extérieur est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé dans un premier et un second étages de compression 4 et 6 avant d'arriver dans une chambre de combustion 7, après quoi il se détend en traversant un ensemble de turbines 8 avant d'être évacué vers l'arrière en générant de la poussée. Le flux secondaire est quant à lui propulsé directement vers l'arrière par la soufflante dans une veine délimitée par le carter 9 pour générer une poussée complémentaire.

La détente dans les turbines, qui permet d'entraîner le compresseur et la soufflante, a lieu à température élevée du fait qu'elle se produit immédiatement après la combustion. Cette turbine est ainsi conçue et dimensionnée pour fonctionner dans des conditions sévères de température, de pression et de débit de fluide.

Elle comporte des séries d'aubes orientées radialement et régulièrement espacées autour d'un arbre de rotation du moteur, et qui sont soumises aux conditions les plus sévères en ce qui concerne les aubes des premiers étages de détente de cette turbine, à savoir les étages les plus proches de la chambre de combustion 7 communément appelés étages haute pression.

Les besoins accrus en performances conduisent à concevoir des moteurs de plus faible taille fonctionnant dans des environnements plus sévères, ce qui implique d'améliorer l'efficacité du refroidissement de ces aubes.

Ce refroidissement est assuré en faisant circuler dans ces aubes de l'air plus froid prélevé au niveau du compresseur et admis en pied d'aube pour cheminer le long de circuits internes. Cet air est évacué par des perçages traversants répartis sur la paroi de l'aube et qui permettent aussi de créer à sa surface externe un film d'air plus froid que l'air environnant.

L'utilisation de cet air de refroidissement est défavorable en termes de performance puisqu'il est réinjecté dans le flux primaire seulement au niveau des pales, de sorte que l'énergie investie en le compressant n'est pas entièrement restituée en matière de poussée. C'est la raison pour laquelle il est nécessaire de refroidir les aubages le plus efficacement en utilisant le moins d'air possible. Autrement dit, l'économie d'air de refroidissement permet de réduire la consommation spécifique du moteur.

A cet effet, les régions intérieures de l'aube comportent des artifices, c'est-à-dire des reliefs internes qui perturbent l'écoulement de l'air pour accroître l'efficacité du transfert thermique. Par ailleurs, la répartition du débit est optimisée pour garantir un taux de surpression minimal au niveau des perçages afin d'éviter la réintroduction d'air chaud du flux primaire dans l'aube.

Le but de l'invention est d'apporter une solution pour améliorer le transfert de la chaleur depuis l'aube vers l'air de refroidissement. Les documents WO 2014/175951 A2, DE 83 05 539 U1, FR 2995 342 A1, EP 19 23 537 A2 et EP 2 947 273 A1 représentent l'état de la technique.

### EXPOSÉ DE L'INVENTION

La présente invention concerne une aube de turbine de turbomachine selon la revendication 1, une turbine de turbomachine selon la revendication 7, une turbomachine selon la revendication 8 et un procédé de fabrication d'une aube selon l'une des revendications 9 ou 10.

Avec l'agencement selon la revendication 1 l'air admis pour le refroidissement de l'aube est immédiatement mis en rotation dès son entrée dans le pied d'aube pour favoriser un échange thermique accru avec l'aube dès le début de son parcours dans celle-ci.

L'invention a également pour objet une aube ainsi définie, comportant une plaque calibrée comportant des trous pour ajuster le débit d'air admis dans chaque conduit, cette plaque étant rapportée à la face inférieure du pied d'aube, et dans laquelle chaque élément hélicoïdal est porté par cette plaque calibrée en étant rigidement solidarisé à cette plaque.

L'invention a également pour objet une aube ainsi définie, dans laquelle la plaque calibrée est solidarisée à la face inférieure du pied d'aube par soudage ou par brasage.

L'invention a également pour objet une aube ainsi définie, comprenant un élément hélicoïdal ayant une hauteur comprise entre vingt pourcent et cent pourcent de la hauteur de la portion d'admission qu'il équipe.

L'invention a également pour objet une aube ainsi définie, comprenant un élément hélicoïdal ayant un angle de torsion total compris entre trente degrés et mille-quatre-vingt degrés.

L'invention a également pour objet une aube ainsi définie, comprenant un élément hélicoïdal ayant un pas non constant qui diminue depuis la base de cet élément jusqu'au sommet de cet élément.

### BRÈVE DESCRIPTION DES DESSINS

La figure 1 déjà décrite est une vue latérale en coupe d'un turboréacteur à double flux de l'Etat de la technique ;
La figure 2 est une vue d'ensemble en perspective d'une aube haute pression de turbine de turboréacteur ;
La figure 3 est une vue schématique en perspective d'une forme d'hélicoïde régulière ;
La figure 4 est une vue en perspective d'un élément hélicoïdal de l'aube selon l'invention ;
La figure 5 est une vue en perspective montrant schématiquement un élément hélicoïdal implanté dans une portion d'admission du pied d'aube selon l'invention ;
La figure 6 est une vue en perspective d'une plaquette portant un élément hélicoïdal selon l'invention ;
La figure 7 est une vue perspective illustrant le montage d'une plaquette portant un élément hélicoïdal pour l'aube selon l'invention ;
La figure 8 est une vue en perspective montrant une plaquette portant un élément hélicoïdal équipant l'aube selon l'invention ;
La figure 9 est une vue en perspective montrant une face inférieure du pied d'aube auquel est soudée une plaquette portant un élément hélicoïdal conformément à l'invention.

### EXPOSÉ DÉTAILLÉ DE MODES DE RÉALISATION PARTICULIERS

L'idée à la base de l'invention est de mettre en rotation l'air lors de son admission en pied de pale, au moyen d'une forme hélicoïdale, afin d'alimenter le circuit avec un air qui est tourbillonnant pour améliorer les échanges thermiques.

Une telle aube, qui est repérée par 11 sur la figure 2, comprend un pied 12 par lequel elle est fixée à un disque de turbine non représenté, et une pale 13 portée par ce pied 12, avec une région intermédiaire 14 appelée plateforme s'étendant à peu près parallèlement à l'axe de rotation AX du moteur.

La pale 13 s'étend selon une direction d'envergure EV proche d'une direction radiale par rapport à l'axe AX, depuis une base 15 par laquelle elle est raccordée à la plateforme 14, jusqu'à un sommet 16. Elle s'étend longitudinalement depuis un bord d'attaque 18 jusqu'à un bord de fuite 19 qui sont parallèles à la direction d'envergure EV, le bord d'attaque 18 correspondant à la région située à l'amont AM de la pale 13, le bord de fuite 19 correspondant à sa région aval AV, par rapport au sens d'écoulement du fluide.

L'aube 11, c'est-à-dire l'ensemble que constitue le pied 12 et la pale 13 avec la plateforme 14 est une pièce monobloc issue de fonderie comportant ici cinq conduits internes dans lesquels circule de l'air de refroidissement. Chaque conduit comporte une portion d'admission sous forme d'un trou cylindrique lisse s'étendant dans le pied 12, qui s'ouvre dans une face inférieure 21 du pied 12 pour collecter l'air, et qui d'autre part se prolonge dans l'aube pour former une canalisation de circulation d'air.

Les parois de la pale 13 comportent des séries de trous traversants, 22, 23 et de fentes 24 assurant l'évacuation de l'air de refroidissement qui circule dans les canalisations internes de cette pale 13.

Les cinq portions d'admissions cylindriques s'étendant dans le pied 12 sont repérées par 26a-26e dans les figures, les canalisations correspondantes qui serpentent dans la pale 13 n'étant pas représentées afin de simplifier les vues.

Ces cinq portions d'admission 26a-26e s'étendent dans le pied 12 qui a quant à lui une forme générale de caisson délimitée par sa face inférieure 21 plane parallèle à l'axe AX, par une face amont et une face aval 27, 28 sensiblement planes et d'orientation normale à l'axe AX, et par deux faces latérales 29, 31. En pratique, les faces latérales de ce pied ont des formes crénelées grâce auxquelles ce pied 12 constitue l'attache par laquelle l'aube est solidarisée au disque, la face inférieure 21 étant celle qui est opposée à la pale 12.

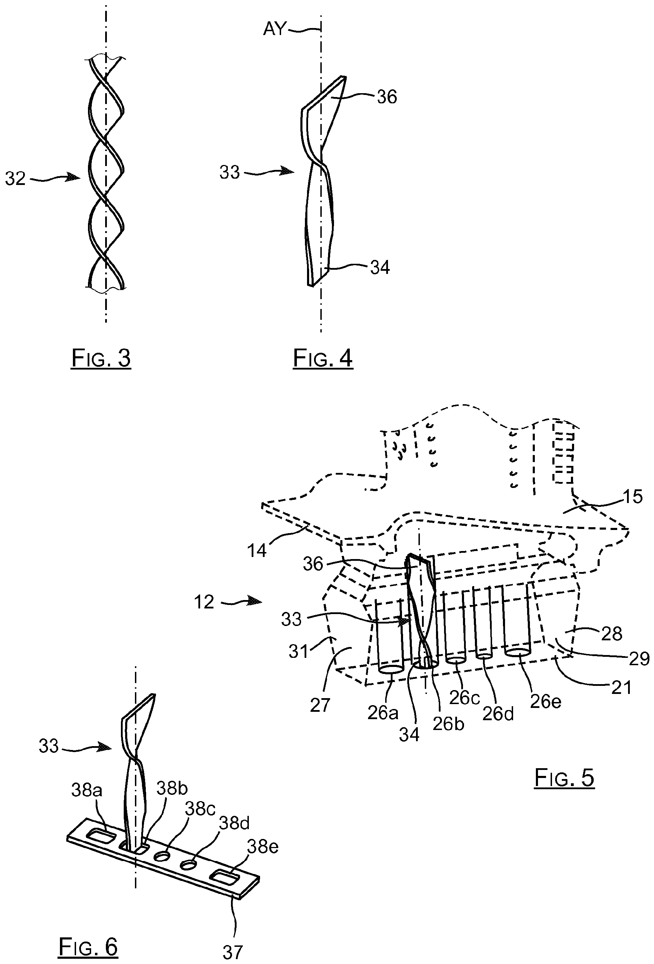

Selon l'invention, on prévoit de placer dans une ou plusieurs des portions d'admission cylindriques lisses un élément hélicoïdal, c'est-à-dire du type de l'hélicoïde 32 représentée sur la figure 3 pour faire tourbillonner l'air de refroidissement lors de son admission dans le pied de pale 12.

L'hélicoïde 32 de la figure 3 a une forme régulière s'apparentant à celle d'une vis sans fin, c'est-à-dire présentant un pas qui est constant tout le long de sa hauteur.

Mais la forme retenue pour l'élément hélicoïdal de l'aube est avantageusement optimisée pour présenter avantageusement un pas qui diminue le long de sa hauteur, de manière à mettre en rotation l'air admis en pied d'aube de façon progressive pour limiter la perte de charge qu'il induit. Dans ce contexte, la variation du pas n'est pas nécessairement linéaire.

Le pas, qui se définit comme la hauteur sur laquelle le bord de l'élément hélicoïdal 33 décrit un tour complet autour de son axe, diminue depuis la base 34 de l'élément, située au niveau de la face 21, jusqu'à son sommet 36 situé à l'intérieur de la portion d'admission.

Autrement dit, cet élément hélicoïdal 33 présente au niveau de sa base 34 une forme quasiment plane, correspondant à une faible torsion ou à un pas très important, et il présente au contraire à son sommet 36 une torsion importante correspondant à un pas beaucoup plus petit.

Dans l'exemple de la figure 4, l'élément hélicoïdal 33 présente un angle de torsion total valant mille-quatre-vingt degrés, qui est formé sur toute sa hauteur. D'une manière générale, cet angle de torsion total est avantageusement compris entre trente degrés et mille-quatre-vingt degrés, soit entre un douzième de tour et trois tours.

Dans l'exemple des figures la hauteur de l'élément hélicoïdal 33 correspond à celle de la portion d'admission cylindrique 26a qui est de l'ordre de la moitié de la hauteur du pied de pale 12 mesurée radialement par rapport à l'axe AX de rotation du moteur.

Mais la hauteur de l'élément hélicoïdal ne correspond pas nécessairement à celle de la portion d'admission : elle est elle aussi déterminée avec d'autres paramètres définissant cet élément hélicoïdal, comme notamment le pas et sa loi d'évolution, à partir de simulations numériques de fonctionnement. Cette hauteur est avantageusement comprise entre vingt et cent pourcent de la hauteur de la portion d'admission.

D'une manière générale, cet élément hélicoïdal 33 a une forme correspondant à celle d'une plaque rectangulaire qui est vrillée d'un demi-tour autour d'un axe radial AR par rapport à l'axe AX, dont l'orientation est proche de celle de l'axe d'envergure EV de l'aube. Comme on l'aura compris, la plaque rectangulaire de base a une longueur correspondant à celle de la portion cylindrique d'admission et une largeur correspondant au diamètre de cette portion.

Comme représenté sur la figure 5, cet élément hélicoïdal 33 est intégré à la portion d'admission 26b de la pale 12 de sorte que sa base est située au niveau de la face 21 du pied de pale 12 et que son sommet est situé dans le corps du pied de pale 12, au niveau de la région dans laquelle cette portion d'admission débouche dans une portion de refroidissement de l'aube.

L'élément hélicoïdal 33 est fabriqué avec l'aube par moulage, comme c'est le cas dans la figure 5, de sorte que l'aube moulée intègre d'emblée dans son ou ses portions d'admission 26a-26e un ou des éléments hélicoïdaux mettant en rotation l'air de refroidissement pour favoriser l'efficacité de ce refroidissement.

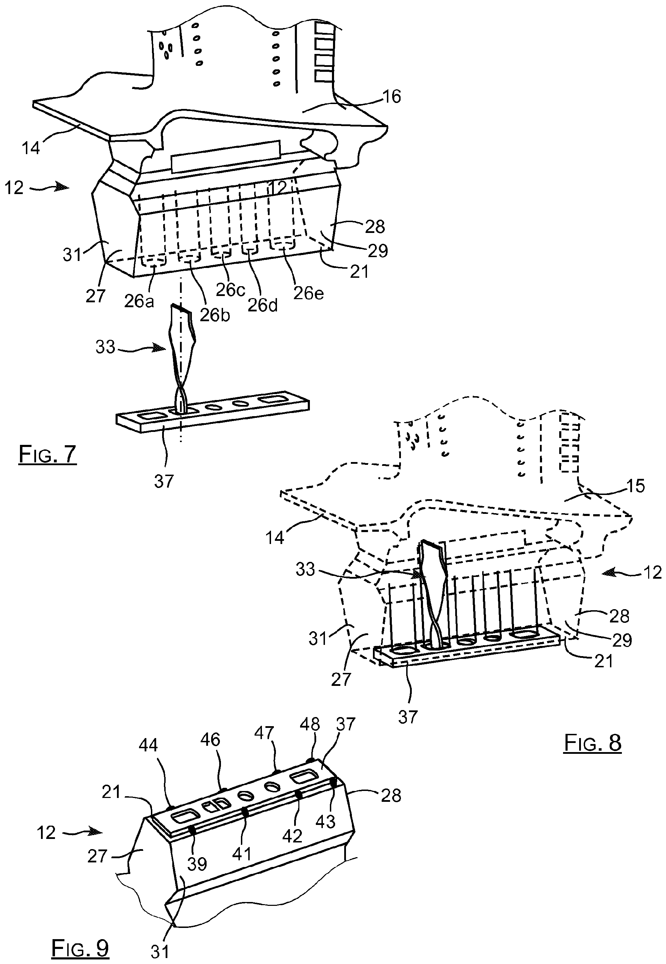

Pour simplifier la fabrication, et également pour intégrer l'élément à une aube qui en est dépourvue, cet élément hélicoïdal 33 est avantageusement porté par une plaque calibrée 37, comme illustré sur la figure 6, qui est rapportée et soudée contre la face 21 du pied d'aube 12 après moulage du corps de cette aube 12 comme représenté schématiquement sur la figure 9.

Comme visible sur la figure 6, une telle plaque calibrée 37 a une forme rectangulaire plane comportant pour chaque portion d'admission 26a-26e un trou correspondant 38a-38e ayant une section dont l'aire est calibrée, pour ajuster le débit d'air entrant dans chaque portion d'admission 26a-26e vis-à-vis des contraintes de fonctionnement.

L'élément hélicoïdal 33 a sa base 34 qui s'étend dans le trou 38a de la plaque 37 pour le partager en deux parties de mêmes sections, et il s'étend par rapport à cette plaque 37 de sorte que son axe de torsion est orienté sensiblement perpendiculairement à celle-ci dans l'exemple des figures.

L'élément hélicoïdal 33 et la plaque 37 peuvent être des éléments distincts solidarisés l'un à l'autre par soudage, avant de monter l'ensemble et de fixer la plaque 37 à la face 21 du pied 12 au moyen par exemple de points de soudage 39-48 des bords de cette plaque 37 à la face 21, comme sur la figure 9. Dans ce cas, les extrémités de la base 34 de l'élément hélicoïdal sont soudées au bord interne du trou calibré correspondant pour assurer la fixation de cet élément à la plaque.

Comme illustré sur la figure 7, le montage de la plaque 37 avec sa ou ses éléments hélicoïdaux 33 consiste principalement à la présenter en vis-à-vis de la face 21, pour engager chaque élément hélicoïdal dans la portion d'admission correspondante jusqu'à arrivée de la plaque 37 au contact de la face 21. La plaque peut alors être soudée à la face 21.

Dans l'exemple des figures, l'aube est équipée d'un seul élément hélicoïdal 33 équipant la portion d'admission 26b, mais l'aube peut aussi bien être équipée de plusieurs éléments hélicoïdaux équipant tout ou partie des différentes portions d'admission que comporte son pied. Ces éléments hélicoïdaux peuvent être moulés avec le corps d'aube ou bien rapportés a posteriori.

Dans le cas de plusieurs éléments hélicoïdaux, ils peuvent présenter des caractéristiques différentes en ce qui concerne notamment leurs angles de torsion, l'évolution de leur torsion depuis leurs bases jusqu'à leurs sommets respectifs, et leurs hauteurs. Ces caractéristiques sont déterminées par calcul ou simulation de manière à optimiser le refroidissement pour chaque portion d'admission. L'aube peut ainsi comporter un élément hélicoïdal dans chaque portion d'admission et chaque hélice peut être différente des autres.

Les éléments hélicoïdaux peuvent être fabriqués séparément par exemple par torsion d'éléments de tôle rectangulaires, et rapportés à la plaque de calibration par soudage. Ils peuvent aussi être obtenus directement par fabrication additive de l'aube, ou encore être fabriqués d'une seule pièce avec la plaque de calibration par fonderie ou bien par fabrication additive.

Le choix d'éléments hélicoïdaux portés par la plaque de calibration pour être rapportés au pied d'aube permet notamment d'équiper des aubes existantes d'éléments hélicoïdaux, sans devoir modifier la conception du corps d'aube.

Comme on l'aura compris, les éléments hélicoïdaux mettent en rotation l'air dès son admission dans le pied de pale pour le faire tourbillonner de manière à accroître les échanges thermiques dans les conduits en y établissant des turbulences. Ces échanges sont ainsi améliorés y compris dans les portions d'admission traversant le pied de pale ce qui apporte entre autres une plus grande uniformité dans le refroidissement de cette pale contribuant à accroître sa tenue mécanique.

## Revendications

1. Aube (11) de turbine de turbomachine telle qu'un turbopropulseur ou un turboréacteur, cette aube (11) comprenant un pied (12) portant une pale (13), cette aube (11) comportant au moins un conduit de circulation d'air pour la refroidir en fonctionnement, ce conduit comportant au niveau du pied d'aube (12) une portion d'admission (26a-26e) pour collecter l'air de refroidissement, cette portion d'admission (26a-26e) s'étendant depuis une face inférieure (21) du pied d'aube (12) qui est opposée à la pale (13), **caractérisée en ce que** au moins une portion d'admission (26a-26e) est équipée d'un élément hélicoïdal (33) ayant une base (34) située au niveau de la face inférieure (21) du pied (12), pour faire tourbillonner l'air de refroidissement afin d'en améliorer l'efficacité de refroidissement.

2. Aube selon la revendication 1, comportant une plaque calibrée (37) comportant des trous (38a-38e) pour ajuster le débit d'air admis dans chaque conduit, cette plaque étant rapportée à la face inférieure (21) du pied d'aube (12), et dans laquelle chaque élément hélicoïdal (33) est porté par cette plaque calibrée (37) en étant rigidement solidarisé à cette plaque (37).

3. Aube selon la revendication 2, dans laquelle la plaque calibrée (37) est solidarisée à la face inférieure du pied d'aube (12) par soudage ou par brasage.

4. Aube selon l'une des revendications 1 à 3, comprenant un élément hélicoïdal (33) ayant une hauteur comprise entre vingt pourcent et cent pourcent de la hauteur de la portion d'admission (26a-26e) qu'il équipe.

5. Aube selon l'une des revendications précédentes, comprenant un élément hélicoïdal (33) ayant un angle de torsion total compris entre trente degrés et mille-quatre-vingt degrés.

6. Aube selon l'une des revendications précédentes, comprenant un élément hélicoïdal (33) ayant un pas non constant qui diminue depuis la base (34) de cet élément jusqu'au sommet (36) de cet élément (33).

7. Turbine de turbomachine comprenant une aube selon l'une des revendications précédentes.

8. Turbomachine comprenant une turbine selon la revendication précédente.

9. Procédé de fabrication d'une aube (11) selon la revendication 1, dans lequel l'aube (11) est obtenue par moulage et dans lequel chaque élément hélicoïdal (33) est moulé avec l'aube (11).

10. Procédé de fabrication d'une aube (11) selon la revendication 1, dans lequel l'aube (11) est obtenue par fabrication additive.

## Patentansprüche

1. Turbinenschaufel (11) einer Turbomaschine wie z.B. einer Propellerturbine oder einer Strahlturbine, wobei die Schaufel (11) einen Fuß (12) aufweist, der ein Blatt (13) trägt, wobei die Schaufel (11) mindestens eine Luftzirkulationsleitung zur Kühlung derselben im Betrieb aufweist, wobei die Leitung auf Höhe des Schaufelfußes (12) einen Ansaugabschnitt (26a-26e) zum Aufnehmen der Kühlluft aufweist, wobei sich der Ansaugabschnitt (26a-26e) von einer Innenfläche (21) des Schaufelfußes (12) erstreckt, die dem Blatt (13) gegenüberliegt, **dadurch gekennzeichnet, dass** mindestens ein Ansaugabschnitt (26a-26e) mit einem schraubenförmigen Element (33) mit einem auf Höhe der Innenfläche (21) des Fußes (12) gelegenen Unterteil ausgerüstet ist, um die Kühlluft zu verwirbeln, um deren Kühlwirkung zu verbessern.

2. Schaufel nach Anspruch 1, mit einer kalibrierten Platte (37) mit Löchern (38a-38e) zur Einstellung der in jede Leitung angesaugten Luftmenge, wobei die Platte an der Innenfläche (21) der Schaufel (12) angebaut ist, und in welcher jedes schraubenförmige Element (33) von der kalibrierten Platte (37) getragen wird, indem es mit der Platte (37) fest verbunden ist.

3. Schaufel nach Anspruch 2, in welcher die kalibrierte Platte (37) mit der Innenfläche des Schaufelfußes (12) durch Schweißen oder durch Löten verbunden ist.

4. Schaufel nach einem der Ansprüche 1 bis 3, mit einem schraubenförmigen Element (33), welches eine Höhe zwischen zwanzig Prozent und hundert Prozent der Höhe des Ansaugabschnittes (26a-26e) aufweist, an den es angebaut ist.

5. Schaufel nach einem der vorhergehenden Ansprüche, mit einem schraubenförmigen Element (33), das einen Gesamtdrehwinkel zwischen dreißig Grad und eintausendachtzig Grad aufweist.

6. Schaufel nach einem der vorhergehenden Ansprüche, mit einem schraubenförmigen Element (33), welches eine nicht konstante Teilung aufweist, die sich von dem Unterteil (34) dieses Elements bis zum Scheitelpunkt (36) dieses Elements (33) verringert.

7. Turbomaschinenturbine mit einer Schaufel nach einem der vorhergehenden Ansprüche.

8. Turbomaschine mit einer Turbine nach dem vorhergehenden Anspruch.

9. Herstellungsverfahren einer Schaufel nach Anspruch 1, in dem die Schaufel (11) durch Gießen erhalten wird und in dem jedes schraubenförmige Element (33) mit der Schaufel (11) gegossen wird.

10. Herstellungsverfahren einer Schaufel nach Anspruch 1, in dem die Schaufel (11) durch additive Herstellung erhalten wird.

## Claims

1. Vane (11) of a turbine engine such as a turboprop or a turbojet engine, said vane (11) comprising a root (12) supporting a blade (13), said vane (11) including at least one air-circulation duct for cooling it during operation, said duct including, at the vane root (12), an intake portion (26a-26e) for collecting the cooling air, said intake portion (26a-26e) extending away from a lower surface (21) of the vane root (12) opposite to the blade (13), **characterised in that** at least one intake portion (26a-26e) is provided with a helical element (33) having a base (34) located at the lower surface (21) of the vane root (12), for swirling the cooling air in order to improve the cooling efficiency thereof.

2. Vane according to claim 1, comprising a calibrated plate (37) comprising holes (38a-38e) for adjusting the rate of the intake air flow in each duct, said plate being fixed to the lower surface (21) of the vane root (12), and wherein each helical element (33) is supported by said calibrated plate (37) by being rigidly secured to said plate (37).

3. Vane according to claim 2, wherein the calibrated plate (37) is secured to the lower surface of the vane root (12) by welding or brazing.

4. Vane according to one of claims 1 to 3, comprising a helical element (33) having a height which lies in the range twenty percent to one hundred percent of the height of the intake portion (26a-26e) that it equips.

5. Vane according to one of the previous claims, comprising a helical element (33) having a total torsional angle that lies in the range thirty degrees to one thousand and eighty degrees.

6. Vane according to one of the previous claims, comprising a helical element (33) having a non-constant pitch, which decreases from the base (34) of said element to the apex (36) of said element (33).

7. Turbine of a turbine engine comprising a vane according to one of the previous claims.

8. Turbine engine comprising a turbine according to the previous claim.

9. Method of manufacturing a vane (11) according to claim 1, wherein the vane (11) is obtained by moulding and wherein each helical element (33) is moulded with the vane (11).

10. Method of manufacturing a vane (11) according to claim 1, wherein the vane (11) is obtained by additive manufacturing.
